# EUROPÄISCHE PATENTSCHRIFT

(11) **EP 2 475 905 B1**
(45) Veröffentlichungstag und Bekanntmachung des Hinweises auf die Patenterteilung: **06.11.2013**
(21) Anmeldenummer: 10718880.7
(22) Anmeldetag: 24.04.2010
(51) Int. Cl.: F16D 13/62

(54) **LAMELLENTRÄGER FÜR EINE LAMELLENKUPPLUNG BZW. VERFAHREN ZUR HERSTELLUNG EINES SOLCHEN LAMELLENTRÄGERS**
DISK CARRIER FOR A MULTI-DISK CLUTCH AND METHOD FOR PRODUCING SUCH A DISK CARRIER
PORTE-DISQUES POUR EMBRAYAGE MULTIDISQUE, ET PROCÉDÉ DE FABRICATION D'UN TEL PORTE-DISQUES

(30) Priorität: 08.09.2009 DE 102009040587
(43) Veröffentlichungstag der Anmeldung: 18.07.2012
(73) Patentinhaber: Volkswagen Aktiengesellschaft, 38440 Wolfsburg (DE)
(72) Erfinder: SCHMIDT, Andreas, 32602 Vlotho (DE); LERCH, Alexander, 34327 Körle (DE); KOLZE, Fabian, 39179 Barleben (DE)
(86) Internationale Anmeldenummer: PCT/EP2010/002541
(87) Internationale Veröffentlichungsnummer: WO 2011/029489

(56) Entgegenhaltungen:
- DE-A1-102005 055 771
- FR-A1- 2 631 091
- US-A- 4 609 088

## Beschreibung

Die Erfindung betrifft einen Lamellenträger für eine Lamellenkupplung, insbesondere für eine Doppelkupplung. Dieser weist insbesondere einen Umfangsbereich auf, wobei der Umfangsbereich zur Verbindung mit mindestens einer Lamelle ausgebildet ist. Die Erfindung betrifft ferner ein Verfahren zur Herstellung eines Lamellenträgers.

Es ist bekannt, in Mehrfachkupplungen, beispielsweise Doppelkupplungen, Lamellenträger aus Stahlblech einzusetzen. Diese Lamellenträger können als Blechtiefziehteile gefertigt sein. Solche Lamellenträger aus Stahlblech zeichnen sich u. a. durch eine hohe Festigkeit und durch eine einfache Umformbarkeit aus. Es sind insbesondere tiefgezogene, kaltgeformte Lamellenträger aus Stahlblech bekannt. Der Umfangsbereich dieser Lamellenträger weist eine Verzahnung auf, die zur Verbindung mit entsprechenden Außen- oder Innenlamellen geeignet ist.

Aus der DE 199 16 037 C1 ist ein Verfahren zur Herstellung von Lamellenträgern bekannt. Dabei werden Rohlinge durch Urformen aus einem Leichtmetall in einem ersten Verfahrensschritt hergestellt, um ein möglichst geringes Gewicht zu erreichen. In einem nachfolgenden Verfahrensschritt werden die Rohlinge im Hinblick auf ihre endgültige geometrische Abmessung und Oberflächenqualität weiter bearbeitet. In einem dritten Verfahrensschritt müssen nun die Oberflächen der aus Leichtmetall hergestellten Lamellenträger mit einer härteren Oberflächenschicht versehen werden. Dieses Verfahren ist aufwendig und kostenintensiv.

Im Dokument US 4,609,088 (D1) ist eine Trockenkupplungsscheibe beschrieben, in welcher ein Dralldrehmoment (twisting torque) erzeugt wird. Die Kupplungsscheibe umfasst eine sich radial nach außen erstreckende Kurvenscheibe an einer Keilanlagefläche. Die Kurvenscheibe weist Spitzen auf, welche auf Blattfedern einwirken, so dass diese bei Drehung der Kurvenscheibe radial nach außen deformiert werden. In einer Ausführungsform können die Kurvenscheibe und die Keilanlagefläche aus Karbonfasermaterial bestehen.

Das Dokument DE 10 2005 055 771. A1 (D2) betrifft eine Kupplungsnabe aus thermoplastischem Kunststoff. Zur Erhöhung der Festigkeit und Formbeständigkeit enthält der Kunststoff eine Faserverstärkung, beispielsweise aus Glasfasern oder Karbonfasern. Die Kupplungsnaben können in einem Spritzgussverfahren hergestellt werden.

Im Dokument FR 2 631 091 (D3) ist ein Schwingungsdämpfer für eine Reibkupplung eines automobilen Fahrzeugs dargestellt. Der Schwingungsdämpfer kann mit einem Träger für Kupplungslamellen verbunden sein. Der Schwingungsdämpfer umfasst wenigstens zwei Paare von elastischen Scheiben, wobei ein Paar vom anderen Paar eingerahmt und gegeneinander winkelverdreht aufgenommen ist. Die elastischen Scheiben können aus einen Verbundwerkstoff mit einer faserverstärkten organischen Matrix bestehen.

Die im Stand der Technik bekannten Lamellenträger haben den Nachteil, dass diese entweder ein hohes Massenträgheitsmoment aufweisen oder aufwendig und kostenintensiv herzustellen sind. Lamellenträger aus Stahlblechen haben den Nachteil, dass aufgrund der hohen Materialdichte sich je nach Gestaltung der Bauteile große Massenträgheitsmomente ergeben können. Diese Massenträgheitsmomente können unter Umständen die Leistungsfähigkeit der Schaltradsynchronisierung vermindern. Die Massenträgheitsmomentkönnen daher zu einem erhöhten Verschleiß und einem reduzierten Schaltkomfort der entsprechenden Mehrfachkupplung führen.

Der Erfindung liegt daher die Aufgabe zugrunde, einen Lamellenträger der eingangs genannten Art bzw. ein Verfahren zur Herstellung eines Lamellenträgers derart auszugestalten und weiterzubilden, dass eine große Massenträgheit vermieden ist und damit auch eine Belastung der Synchronisiereinrichtungen eines Getriebes verringert ist.

Diese der Erfindung zugrunde liegende Aufgabe wird nun - für den Lamellenträger - dadurch gelöst, dass der Lamellenträger zumindest teilweise aus einem Verbundwerkstoff hergestellt ist. Vorzugsweise weist der Lamellenträger einen Nabenbereich und einen den Nabenbereich und einen Umfangsbereich verbindenden Bodenbereich auf. Es gibt nun verschiedene Möglichkeiten bezüglich der Materialwahl, der Materialkombinationen, der Materialverarbeitung und/oder der geometrischen Gestaltung der Komponenten. Vorzugsweise weist der Lamellenträger in dem Umfangsbereich und/oder in dem Nabenbereich je einen Grundkörper aus Metall auf. In dem dazwischen angeordneten Bodenbereich bzw. im verbleibenden Teilbereich des Umfangsbereiches weist der Lamellenträger vorzugsweise einen Verbundwerkstoff insbesondere einen Faserverbundwerkstoff auf. Insbesondere der Bodenbereich ist hauptsächlich drehmomentbelastet und kann daher im Wesentlichen aus einem faser- und/oder partikelverstärkten Werkstoff - wie beispielsweise CfK - bestehen. Hierdurch ist das gesamte Massenträgheitsmoment des Lamellenträgers vermindert. Die Synchronisiereinrichtungen eines Getriebes sind durch das verminderte Massenträgheitsmoment und die reduzierte Masse der Lamellenträger entlastet.

Diese der Erfindung zugrunde liegende Aufgabe wird nun - für das Verfahren - dadurch gelöst, dass der Lamellenträger zumindest teilweise aus einem Verbundwerkstoff hergestellt wird. Das Verfahren hat den Vorteil, dass dadurch Lamellenträger mit einer geringen Masse und mit geringeren Massenträgheitsmomenten herstellbar sind. Die Synchronisiereinrichtungen entsprechender Getriebe, die mit einer solchen Lamellenkupplung verbunden sind, sind daher entlastet. Bei der Herstellung des Lamellenträgers wird vorzugsweise mindestens ein Grundkörper aus einem Metall verwendet. Vorzugsweise wird ein Umfangsteil als ein erster Grundkörper mit einer Verzahnung aus Metall, insbesondere Blech, vorzugsweise Stahlblech beispielsweise durch Tiefziehen hergestellt. Ferner wird vorzugsweise als weiterer, zweiter Grundkörper ein Nabenteil aus Metall, beispielsweise Blech, insbesondere Stahlblech hergestellt. Das Umfangsteil und das Nabenteil können nun durch Spritzpressen oder Formpressen mittels eines partikelverstärkten und/oder faserverstärkten Werkstoffes verbunden werden, so dass der Lamellenträger insgesamt als ein Verbundwerkstoffteil hergestellt wird bzw. ist. Die eingangs genannten Nachteile sind daher vermieden und entsprechende Vorteile erzielt.

Es gibt nun eine Vielzahl von Möglichkeiten, den erfindungsgemäßen Lamellenträger und das erfindungsgemäße Verfahren zur Herstellung eines Lamellenträgers auszugestalten und weiterzubilden. Hierzu darf zunächst auf die dem Patentanspruch 1 und auf die dem Patentanspruch 8 nachgeordneten Patentansprüche verwiesen werden. Im Folgenden wird nun eine bevorzugte Ausgestaltung der Erfindung anhand der Zeichnung und der dazugehörigen Beschreibung näher erläutert. In der Zeichnung zeigt:

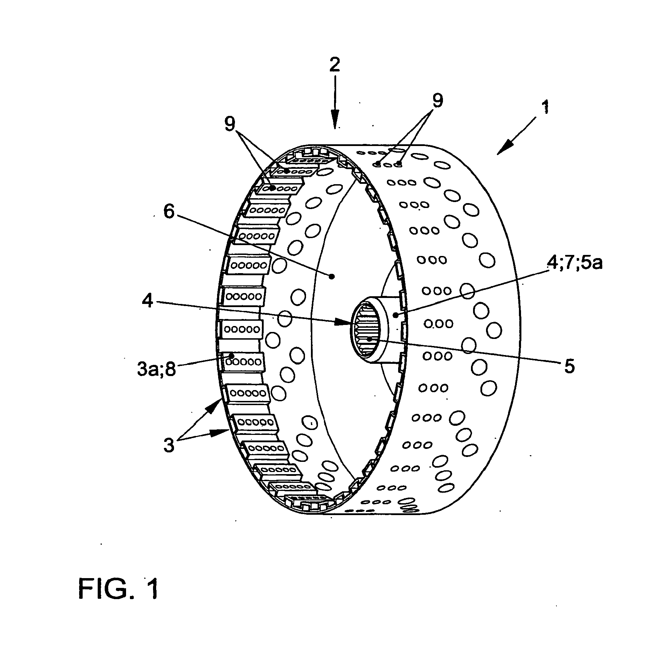

- Fig. 1: in einer schematischen, perspektivischen Darstellung einen erfindungsgemäßen Lamellenträger.

Fig. 1 zeigt einen Lamellenträger 1 für eine nicht dargestellte Lamellenkupplung. Die Lamellenkupplung kann insbesondere für eine Mehrfachkupplung, vorzugsweise für eine Doppelkupplung Verwendung finden. Die Lamellenkupplung ist insbesondere für den Einsatz in einem Kraftfahrzeug ausgebildet.

Der Lamellenträger 1 weist insbesondere einen Umfangsbereich 2 auf. Der Umfangsbereich 2 erstreckt sich vorzugsweise im Wesentlichen ringförmig. Der Umfangsbereich 2 erstreckt sich im Wesentlichen in axialer Richtung. Der Umfangsbereich 2 ist zur Verbindung mit mindestens einer Lamelle ausgebildet. Der Umfangsbereich 2 weist eine Verzahnung 3 auf, wobei in die Verzahnung 3 die nicht dargestellten Lamellen vorzugsweise mit entsprechenden Zähnen eingreifen können. Der hier dargestellte Lamellenträger 1 ist als Außenlamellenträger ausgebildet. Die Verzahnung 3 ist an der Innenumfangsfläche des Umfangsbereiches 2 angeordnet. In anderer nicht dargestellter Ausgestaltung kann der Lamellenträger 1 jedoch auch als Innenlamellenträger ausgebildet sein, wobei dann an dem entsprechenden Umfangsbereich 2 die Verzahnung 3 an der Außenumfangsfläche ausgebildet ist.

Ferner weist der Lamellenträger 1 einen Nabenbereich 4 auf. Der Nabenbereich 4 ist zur Verbindung mit einer nicht dargestellten Welle, insbesondere einer Getriebeeingangswelle ausgebildet. Der Nabenbereich 4 weist eine Innenverzahnung 5 auf, die mit einer entsprechenden Außenverzahnung der nicht dargestellten Welle verbindbar ist. Der Nabenbereich 4 ist im Wesentlichen zylindrisch ausgebildet.

Der Lamellenträger 1 weist ferner einen Bodenbereich 6 auf. Der Bodenbereich 6 verbindet den Nabenbereich 4 mit dem Umfangsbereich 2. Der Bodenbereich 6 erstreckt sich vom Nabenbereich 4 nach außen bis zum Umfangsbereich 2. Der Bodenbereich 6 erstreckt sich im Wesentlichen radial nach außen. Der Bodenbereich 6 ist im Wesentlichen scheibenförmig ausgebildet. Der Bodenbereich 6 kann je nach Geometrie der Lamellenkupplung gekröpfte Bereiche oder dergleichen aufweisen.

Die eingangs genannten Nachteile sind nun für den Lamellenträger 1 dadurch vermieden, dass der Lamellenträger 1 zumindest teilweise aus einem Verbundwerkstoff hergestellt ist. Dies hat den Vorteil, dass die Massenträgheit und die Masse des Lamellenträgers 1 reduziert ist. Insbesondere ist es möglich, dass der Lamellenträger 1 in den nur drehmomentführenden Bereichen einen partikel- und/oder faserverstärkten Verbundwerkstoff wie z. B. kohlenstofffaserverstärkten Kunststoff (CfK) aufweist und im Umfangsbereich 2, insbesondere an der Verzahnung 3, vorzugsweise also im Verzahnungsbereich, und im Nabenbereich 4, insbesondere an der Innenverzahnung 5, mindestens einen Grundkörper 3a bzw. 5a aus Metall aufweist. Durch eine solche Ausgestaltung ist die Masse und das Massenträgheitsmoment des Lamellenträgers 1 im Vergleich zu einem vollständig aus Stahlblech hergestellten Lamellenträger verringert. Durch die verringerte Masse des Lamellenträgers 1 werden in einem nachgeschalteten Getriebe vorhandene Synchronisiereinrichtungen entlastet (nicht dargestellt). Es bestehen verschiedene Möglichkeiten bezüglich der Materialwahl, der Materialskombinationen, der Materialverarbeitung und der geometrischen Gestaltung des Lamellenträgers 1 bzw. seiner Komponenten.

Der Verbundwerkstoff kann insbesondere ein faser- und/oder partikelverstärkter Werkstoff sein. Der faserverstärkte Werkstoff kann insbesondere als kohlenstofffaserverstärkter Werkstoff (CfK) ausgebildet sein. Beispielsweise kann der Lamellenträger 1 als CfK-Stahl-Verbundteil ausgebildet sein.

Der Lamellenträger 1 kann insbesondere an der Verzahnung 3 und/oder an der Innenverzahnung 5 die Grundkörper 3a bzw. 5a aus Metall aufweisen. Die Verzahnung 3 kann daher insbesondere aus Metall, insbesondere Stahl, vorzugsweise Stahlblech ausgebildet sein. Der Nabenbereich 4 kann insbesondere mit der Innenverzahnung 5 aus Metall, insbesondere Blech, vorzugsweise Stahlblech ausgebildet sein. Dies hat den Vorteil, dass die Verzahnung 3 und die Innenverzahnung 5 kostengünstig herstellbar und belastbar ausgebildet sind.

Der Bodenbereich 6 weist vorzugsweise den faser- und partikelverstärkten Werkstoff auf. Der Bodenbereich 6 kann insbesondere im Wesentlichen aus dem faser- und/oder partikelverstärkten Werkstoff bestehen. Der Bodenbereich 6 besteht vorzugsweise vollständig aus dem faser- und/oder partikelverstärkten Werkstoff. Alternativ kann der Bodenbereich 6 auch nur teilweise aus dem faser- und/oder partikelverstärkten Werkstoff bestehen.

Der Lamellenträger 1 weist daher vorzugsweise mindestens einen Grundkörper 3a bzw. 5a aus Metall, insbesondere Blech, vorzugsweise Stahlblech auf. Hier im bevorzugten Ausführungsbeispiel weist der Lamellenträger 1 zwei Grundkörper 3a und 5a auf.

Vorzugsweise ist einer der Grundkörper, hier der Grundkörper 5a, als Nabenteil 7 ausgebildet. Das Nabenteil 7 bildet dabei den Nabenbereich 4. Das Nabenteil 7 weist die Innenverzahnung 5 auf. Das Nabenteil 7 kann im Wesentlichen zylinderförmig ausgebildet sein. Das Nabenteil 7 kann zusätzlich einen Kragen (nicht dargestellt) zur Verbindung mit dem Verbundwerkstoff im Bodenbereich 6 aufweisen. Das Nabenteil 7 weist vorzugsweise mehrere Durchbrüche (nicht dargestellt) auf. Die Durchbrüche dienen zur Verbindung des faser- und/oder partikelverstärkten Bodenbereiches 6 mit dem Nabenteil 7. Insbesondere der Kragen kann diese Durchbrüche aufweisen.

Ein weiterer Grundkörper 3a ist ferner als ein Umfangsteil 8 ausgebildet, wobei der Umfangsbereich 2 auch teilweise durch das Umfangsteil 8 gebildet ist. Der Lamellenträger 1 weist vorzugsweise einen einzelnen Grundkörper 3a in Form eines Umfangsteils 8 auf, wobei das Umfangsteil 8 ebenfalls aus Metall hergestellt ist. Das Umfangsteil 8 ist insbesondere aus einem Blech beispielsweise einem Stahlblech hergestellt. Das Umfangsteil 8 kann im Wesentlichen ringförmig ausgebildet sein und sich im Wesentlichen in axialer Richtung erstrecken. Das Umfangsteil 8 ist insbesondere aus einem tiefgezogenen und/oder gewalzten Blech hergestellt. Das Umfangsteil 8 kann wärmebehandelt sein, um eine hohe Abrasionsbeständigkeit zu gewährleisten.

Das hier als Grundkörper 3a ausgebildete Umfangsteil 8 bildet im Wesentlichen einen "Teilbereich" des Umfangsbereiches 2, wobei hier das Umfangsteil 8, also der Grundkörper 3a innenliegend angeordnet ist, d. h. die äußere Fläche bzw. der äußere Bereich des Umfangsbereiches ist aus dem Verbundwerkstoff hergestellt und der Grundkörper 3a hier innenliegend entsprechend angeordnet, so dass der Grundkörper 3a, also das Umfangsteil 8 als innenliegender Teilbereich des Umfangsbereiches 2 bei der hier in Fig. 1 dargestellten Ausführungsform ausgebildet ist.

Das Nabenteil 7 als Grundkörper 5a und das Umfangsteil 8 als Grundkörper 3a sind durch den faser- und/oder partikelverstärkten Werkstoff miteinander verbunden. Der faser- und/oder partikelverstärkte Werkstoff bildet dabei vorzugsweise den Bodenbereich 6 und/oder den entsprechenden Umfangsbereich 2. Das Umfangsteil 8 kann zur Verbindung mit dem faser-und/oder partikelverstärkten Werkstoff mehrere Durchbrüche 9 aufweisen. Die Durchbrüche 9 dienen zur Verbindung des faserverstärkten Werkstoffs mit dem Umfangsteil 8.

Der Lamellenträger 1 ist durch das folgende Verfahren herstellbar. In einem Verfahrensschritt wird das Umfangsteil 8 als Grundkörper 3a hergestellt. Das Umfangsteil 8 kann insbesondere durch Tiefziehen und/oder Walzen eines Bleches hergestellt werden. Der Umfangsbereich 2 bzw. das Umfangsteil 8 wird zur Verbindung mit mindestens einer Lamelle ausgebildet. Das Umfangsteil 8 wird mit der Verzahnung 3 versehen. Die Verzahnung 3 kann dabei entweder an der Außen- oder an der Innenumfangsfläche ausgebildet werden je nach Anwendungsfall und Ausbildung des jeweiligen spezifischen Lamellenträgers als Innen- oder Außenlamellenträger. Das Umfangsteil 8 kann insbesondere ferner durch eine Wärmebehandlung gehärtet werden.

In einem weiteren Verfahrensschritt wird der Grundkörper 5a in Form des Nabenteils 7 aus Stahl hergestellt. Das Nabenteil 7 wird dabei mit der Innenverzahnung 5 versehen.

Die eingangs genannten Nachteile sind nun für das Verfahren dadurch vermieden, dass der Lamellenträger 1 zumindest teilweise aus einem Verbundwerkstoff hergestellt wird. Insbesondere der Bodenbereich 6 wird aus dem Verbundwerkstoff hergestellt. Das Umfangsteil 8 und das Nabenteil 7 werden dazu vorzugsweise an bzw. in einer ersten Form angeordnet. Insbesondere können das Nabenteil 7 und das Umfangsteil 8 auf einer nicht dargestellten Innenform angeordnet werden. Auf die erste Form und/oder das Umfangsteil 8 und/oder das Nabenteil 7 werden danach Gewebefasern beispielsweise in Form von Faserhalbzeugen aufgebracht. Als Faserhalbzeuge können beispielsweise sogenannte Prepregs verwendet werden.

Ein Prepreg (engl. für "vorimprägnierte Fasern") bezeichnet ein Halbzeug, das aus Endlosfasern und einer ungehärteten, beispielsweise duroplastischen Kunststoffmatrix besteht. Die Endlosfasern können als reine unidirektionale Schicht, als Gewebe oder Gelege vorliegen. Das Prepreg wird bahnförmig, auf Rollen gewickelt, geliefert. Das Prepreg kann Kohlenstofffaser-Gewebe aufweisen.

In einem weiteren Verfahrensschritt wird eine zweite Form, welche die Außenkontur des Lamellenträgers 1 vorgibt, danach über die erste Form platziert. In einem weiteren Verfahrensschritt werden die zwischen der ersten und der zweiten Form angeordneten Komponenten - insbesondere das Nabenteil 7, das Umfangsteil 8 und das Fasermaterial und insbesondere ein Matrixmaterial miteinander verpresst. Je nach Ausgestaltung des Verfahrens können die Prepregs bzw. vorimprägnierten Fasern unter Wärme- und/oder Druckeinfluss ausgehärtet werden.

Ein Matrixmaterial kann vor oder nach dem Zusammenfügen der beiden Formen eingebracht werden und dann anschließend ausgehärtet werden, wobei vorzugsweise ein RTM-Verfahren verwendet werden kann (RTM- "resin transfer moulding"). Beim RTM-Verfahren wird das Matrixmaterial bzw. die Formmasse in den Raum zwischen den beiden Formen nach dem Fügen der Formen eingebracht, worin das Matrixmaterial anschließend unter Wärme und/oder Druck aushärtet.

### Bezugszeichenliste

- 1: Lamellenträger
- 2: Umfangsbereich
- 3: Verzahnung
- 3a: Grundkörper
- 4: Nabenbereich
- 5: Innenverzahnung
- 5a: Grundkörper
- 6: Bodenbereich
- 7: Nabenteil
- 8: Umfangsteil
- 9: Durchbrüche

## Patentansprüche

1. Lamellenträger (1) für eine Lamellenkupplung, mit einem Umfangsbereich (2) zur Verbindung mit mindestens einer Lamelle, einem Nabenbereich (4) und einem Bodenbereich (6), der den Umfangbereich (2) und den Nabenbereich (4) miteinander verbindet, **dadurch gekennzeichnet, dass** der Umfangbereich (2) und/oder der Bodenbereich (6) des Lamellenträgers (1) zumindest teilweise aus einem Verbundwerkstoff hergestellt ist.

2. Lamellenträger nach Anspruch 1, **dadurch gekennzeichnet, dass** der Verbundwerkstoff als faser- und/oder partikelverstärkter Werkstoff ausgeführt ist.

3. Lamellenträger nach Anspruch 1 oder 2, **dadurch gekennzeichnet, dass** der Lamellenträger (1) mindestens einen Grundkörper (3a, 5a) aus Metall aufweist.

4. Lamellenträger nach Anspruch 3, **dadurch gekennzeichnet, dass** der Grundkörper (3a) als Umfangsteil (8) ausgebildet ist, wobei der Umfangsbereich (2) teilweise vom Umfangsteil (8) gebildet ist.

5. Lamellenträger nach Anspruch 3 oder 4, **dadurch gekennzeichnet, dass** ein Grundkörper (5a) als ein Nabenteil (7) mit einer Innenverzahnung (5) ausgebildet ist, wobei das Nabenteil (7) den Nabenbereich (4) bildet.

6. Lamellenträger nach Anspruch 4, **dadurch gekennzeichnet, dass** der Umfangsbereich (2) eine Verzahnung (3) am Grundkörper (3a) zum Eingreifen von Zähnen der wenigstens einen Lamelle aufweist.

7. Lamellenträger (1) gemäß einem der vorstehenden Ansprüche, **dadurch gekennzeichnet, dass** der Lamellenträger (1) ein Außenlamellenträger oder ein Innenlamellenträger ist.

8. Verfahren zur Herstellung eines Lamellenträgers (1), insbesondere nach einem der vorstehenden Ansprüche mit einem Umfangsbereich (2) zur Verbindung mit mindestens einer Lamelle, einem Nabenbereich (4) und einem Bodenbereich (6), der den Umfangbereich (2) und den Nabenbereich (4) miteinander verbindet, **dadurch gekennzeichnet, dass** der Umfangsbereich (2) und/oder das Bodenblech (6) des Lamellenträgers (1) zumindest teilweise aus einem Verbundwerkstoff hergestellt wird.

9. Verfahren nach Anspruch 8, **dadurch gekennzeichnet, dass** als ein Grundkörper (5a) ein Nabenteil (7) aus Metall und/oder als ein Grundkörper (3a) ein Umfangsteil (8) aus Metall hergestellt wird und der Grundkörper (3a, 5a) aus Metall mit einem faser- und/oder partikelverstärkten Werkstoff verbunden wird

10. Verfahren nach Anspruch 9 **dadurch gekennzeichnet, dass** der oder die Grundkörper (3a, 5a) mit Gewebefasern und/oder mit einem Matrixmaterial in einer Form angeordnet werden.

11. Verfahren nach Anspruch 10, **dadurch gekennzeichnet, dass** ein ungehärtetes Faserhalbzeug in die Form eingebracht wird.

12. Verfahren nach Anspruch 10 oder 11, **dadurch gekennzeichnet, dass** der oder die Grundkörper (3a, 5a) und das faserverstärkte und/oder partikelverstärkte Material in der Form gepresst werden.

13. Verfahren nach einem der vorstehenden Ansprüche 8 bis 12, **dadurch gekennzeichnet, dass** der Umfangsbereich (2) und/oder der Bodenbereich (6) des Lamellenträgers (1) unter Druck- und/oder Wärmeeinfluss gehärtet wird.

14. Verfahren nach einem der vorstehenden Ansprüche 8 bis 13, **dadurch gekennzeichnet, dass** der Umfangsbereich (2) und/oder der Bodenbereich (6) des Lamellenträgers (1) durch Spritzpressen hergestellt wird.

15. Verfahren nach Anspruch 14, **dadurch gekennzeichnet, dass** der Lamellenträger (1) im resin-transfer-molding-Verfahren (RTM-Verfahren) hergestellt wird.

## Claims

1. Disc carrier (1) for a multi-disc clutch, comprising a circumferential region (2) for connection to at least one disc, a hub region (4) and a base region (6), which connects the circumferential region (2) and the hub region (4) to one another, **characterized in that** the circumferential region (2) and/or the base region (6) of the disc carrier (1) is/are at least partially produced from a composite material.

2. Disc carrier according to Claim 1, **characterized in that** the composite material is given the form of a fibre- and/or particle-reinforced material.

3. Disc carrier according to Claim 1 or 2, **characterized in that** the disc carrier (1) has at least one main body (3a, 5a) of metal.

4. Disc carrier according to Claim 3, **characterized in that** the main body (3a) is formed as a circumferential part (8), the circumferential region (2) being partially formed by the circumferential part (8).

5. Disc carrier according to Claim 3 or 4, **characterized in that** a main body (5a) is formed as a hub part (7) with an internal toothing (5), the hub part (7) forming the hub region (4).

6. Disc carrier according to Claim 4, **characterized in that** the circumferential region (2) has a toothing (3) on the main body (3a) for engaging teeth of the at least one disc.

7. Disc carrier (1) according to one of the preceding claims, **characterized in that** the disc carrier (1) is an outer disc carrier or an inner disc carrier.

8. Method for producing a disc carrier (1), in particular according to one of the preceding claims, comprising a circumferential region (2) for connection to at least one disc, a hub region (4) and a base region (6), which connects the circumferential region (2) and the hub region (4) to one another, **characterized in that** the circumferential region (2) and/or the base region (6) of the disc carrier (1) is/are at least partially produced from a composite material.

9. Method according to Claim 8, **characterized in that** a hub part (7) is produced from metal as a main body (5a) and/or a circumferential part (8) is produced from metal as a main body (3a) and the main body (3a, 5a) of metal is connected to a fibre- and/or particle-reinforced material.

10. Method according to Claim 9, **characterized in that** the main body or bodies (3a, 5a) is/are arranged with fabric fibres and/or with a matrix material in a mould.

11. Method according to Claim 10, **characterized in that** an uncured semifinished fibre material is introduced into the mould.

12. Method according to Claim 10 or 11, **characterized in that** the main body or bodies (3a, 5a) and the fibre-reinforced and/or particle-reinforced material are pressed in the mould.

13. Method according to one of the preceding Claims 8 to 12, **characterized in that** the circumferential region (2) and/or the base region (6) of the disc carrier (1) is/are cured under the influence of pressure and/or heat.

14. Method according to one of the preceding Claims 8 to 13, **characterized in that** the circumferential region (2) and/or the base region (6) of the disc carrier (1) is/are produced by transfer moulding.

15. Method according to Claim 14, **characterized in that** the disc carrier (1) is produced by the resin transfer moulding process (RTM process).

## Revendications

1. Porte-disques (1) pour un embrayage multidisques, comprenant une région périphérique (2) pour la connexion à au moins un disque, une région de moyeu (4) et une région de fond (6) qui relie la région périphérique (2) et la région de moyeu (4) l'une à l'autre, **caractérisé en ce que** la région périphérique (2) et/ou la région de fond (6) du porte-disques (1) sont fabriquées au moins en partie en un matériau composite.

2. Porte-disques selon la revendication 1, **caractérisé en ce que** le matériau composite est réalisé sous forme de matériau renforcé par des fibres et/ou par des particules.

3. Porte-disques selon la revendication 1 ou 2, **caractérisé en ce que** le porte-disques (1) présente au moins un corps de base (3a, 5a) en métal.

4. Porte-disques selon la revendication 3, **caractérisé en ce que** le corps de base (3a) est réalisé sous forme de pièce périphérique (8), la région périphérique (2) étant formée en partie par la pièce périphérique (8).

5. Porte-disques selon la revendication 3 ou 4, **caractérisé en ce qu'**un corps de base (5a) est réalisé sous forme de pièce de moyeu (7) avec une denture intérieure (5), la pièce de moyeu (7) formant la région de moyeu (4).

6. Porte-disques selon la revendication 4, **caractérisé en ce que** la région périphérique (2) présente une denture (3) sur le corps de base (3a) pour venir en prise avec des dents de l'au moins un disque.

7. Porte-disques (1) selon l'une quelconque des revendications précédentes, **caractérisé en ce que** le porte-disques (1) est un porte-disques extérieur ou un porte-disques intérieur.

8. Procédé de fabrication d'un porte-disques (1), en particulier selon l'une quelconque des revendications précédentes, comprenant une région périphérique (2) pour la connexion à au moins un disque, une région de moyeu (4) et une région de fond (6) qui relie la région périphérique (2) et la région de moyeu (4) l'une à l'autre, **caractérisé en ce que** la région périphérique (2) et/ou la région de fond (6) du porte-disques (1) sont fabriquées au moins en partie en un matériau composite.

9. Procédé selon la revendication 8, **caractérisé en ce qu'**une pièce de moyeu (7) en métal est utilisée pour constituer un corps de base (5a) et/ou une pièce périphérique (8) en métal est utilisée pour constituer un corps de base (3a) et le corps de base (3a, 5a) en métal est assemblé avec un matériau renforcé par des fibres et/ou des particules.'

10. Procédé selon la revendication 9, **caractérisé en ce que** le ou les corps de base (3a, 5a) sont disposés dans un moule avec des fibres de tissu et/ou avec un matériau de matrice.

11. Procédé selon la revendication 10, **caractérisé en ce qu'**un produit semi-fini fibreux non durci est introduit dans le moule.

12. Procédé selon la revendication 10 ou 11, **caractérisé en ce que** le ou les corps de base (3a, 5a) et le matériau renforcé par des fibres et/ou renforcé par des particules sont pressés dans le moule.

13. Procédé selon l'une quelconque des revendications précédentes 8 à 12, **caractérisé en ce que** la région périphérique (2) et/ou la région de fond (6) du porte-disques (1) sont durcies sous l'influence de la pression et/ou de la chaleur.

14. Procédé selon l'une quelconque des revendications précédentes 8 à 13, **caractérisé en ce que** la région périphérique (2) et/ou la région de fond (6) du porte-disques (1) sont fabriquées par moulage par transfert.

15. Procédé selon la revendication 14, **caractérisé en ce que** le porte-disques (1) est fabriqué par un procédé de moulage par transfert de résine (procédé RTM).
